# EUROPEAN PATENT APPLICATION

(11) **EP 3 024 268 A1**
(43) Date of publication of application: **25.05.2016**
(21) Application number: 13881394.4
(22) Date of filing: 08.10.2013
(51) Int. Cl.: H04W 24/08

(54) **CALL PROCESSING METHOD, DEVICE AND TERMINAL**

(30) Priority: 19.07.2013 CN 201310307737
(71) Applicant: ZTE Corporation, Shenzhen, Guangdong 518057 (CN)
(72) Inventor: FENG, Ming, Shenzhen Guangdong 518057 (CN)
(74) Representative: Novagraaf Technologies
(86) International application number: PCT/CN2013/084851
(87) International publication number: WO 2014/161286

(57) **Abstract**

Provided are a call processing method, device and terminal. The method comprises: acquiring the call quality of a call link which will be used for a call; and according to the call quality, performing call processing. By means of the present disclosure, the problem that the user experience is seriously affected by instable calls and large time delay existing in the related art is solved. The invention allows a user to know the call quality of a current network before placing a call, thereby enabling said user to select, according to the call quality, the appropriate call mode and application for the call, greatly improving the user experience.

## Description

### Technical field

The present disclosure relates to the field of communications, and including a method and device for processing a call, and terminal.

### Background

With the development of the 3rd-generation (3G for short) and 4th-generation (4G for short) network, and the development of Wireless Local Area Network (WLAN for short), the speed and stability of the data transmission in the data field have been greatly improved, and the coverage of networks are wider and wider; many regions are covered by WLAN. With the development of the Internet, the usage of Internet phone is possible. The Internet phone is popular among users, due to its low call charge, even free, and there are many applications provided with such a function. However, due to the fact that the conditions of the networks where users are located are various, the network quality are different, and the networks of application servers are also different, the call quality after calling is unstable, and the problems of large time delay and even call failure often occur.

Therefore, the problem that the user experience is seriously affected by instable calls and large time delay exist in the related art.

### Summary

A method and device for processing a call, and a terminal are provided in the present disclosure, so as to at least solve the problem that the user experience is seriously affected by instable calls and large time delay exist in the related art.

According to one embodiment of the present disclosure, a method for processing a call is provided, comprising: acquiring link call quality of a call link to be used for a call; and performing a call processing according to the link call quality of the call link.

In an example embodiment, acquiring the link call quality of the call link to be used for the call comprises: determining a call link to be used for detection; acquiring a transmission time delay and a packet loss rate of the call link according to a detection for the call link; and determining the link call quality of the call link, according to the transmission time delay and the packet loss rate.

In an example embodiment, acquiring the transmission time delay and the packet loss rate of the call link, according to the detection for the call link comprises: sending to an opposite end of a transmission link a predetermined number of detection message packets with loads of a fixed size, wherein each of the sent detection message packets carries a sending time stamp; receiving one or more returned detection message packets with loads of the same fixed size returned by the opposite end, wherein each of the one or more returned detection message packets carries a corresponding sending time stamp carried in a corresponding sent detection message packet; determining the transmission time delay of the call link, according to a time point when a returned detection message packet is received and the corresponding sending time stamp carried in the corresponding sent detection message packet; and determining the packet loss rate of the call link, according to the number of the one or more returned detection message packets received and the predetermined number.

In an example embodiment, performing the call processing according to the link call quality of the call link comprises: selecting a calling manner according to link call quality corresponding to different calling manners; and performing the call processing according to the selected calling manner.

In an example embodiment, performing the call processing according to the link call quality of the call link comprises: selecting a calling application, according to link call quality corresponding to different calling applications; and performing the call processing according to the selected calling application.

In an example embodiment, after acquiring the call quality of the call link to be used for the call, the method further comprises: displaying link call quality corresponding to different calling manners and/or link call quality corresponding to different calling applications.

According to another aspect of the present disclosure, a device for processing a call is provided, comprising: an acquiring component, configured to acquire link call quality of a call link to be used for a call; and a processing component, configured to perform a call processing according to the link call quality of the call link.

In an example embodiment, the acquiring component comprises: a first determining element, configured to determine a call link to be used for detection; an acquiring element, configured to acquire a transmission time delay and a packet loss rate of the call link according to a detection for the call link; and a second determining element, configured to determine the link call quality of the call link, according to the transmission time delay and the packet loss rate.

In an example embodiment, the acquiring element comprises: a sending sub-element, configured to send to an opposite end of a transmission link a predetermined number of detection message packets with loads of a fixed size, wherein each of the sent detection message packets carries a sending time stamp; a receiving sub-element, configured to receive one or more returned detection message packets with loads of the same size returned by the opposite end, wherein each of the one or more returned detection message packets carries a corresponding sending time stamp in a corresponding sent detection message packet; a first determining sub-element, configured to determine the transmission time delay of the call link, according to a time point when a returned detection message packet is received and the corresponding sending time stamp carried in the corresponding sent detection message packet; and a second determining sub-element, configured to determine the packet loss rate of the call link, according to the number of the one or more returned detection message packets received and the predetermined number.

In an example embodiment, the processing component comprises: a first selecting element, configured to select a calling manner according to link call quality corresponding to different calling manners; and a first processing element, configured to perform the call processing according to the calling manner by the first selecting element.

In an example embodiment, the processing component comprises: a second selecting element, configured to select a calling application, according to link call quality corresponding to different calling applications; and a second processing element, configured to perform the call processing according to the calling application selected by the second selecting element.

In an example embodiment, the device further comprises: a displaying component, configured to display link call quality corresponding to different calling manners and/or link call quality corresponding to different calling applications.

According to the other aspect of the present disclosure, a terminal is provided, comprising any one of the above devices.

In the present disclosure, the link call quality of the call link to be used for the call is acquired; and according to the link call quality of the call link, the call processing is performed, the problem that the user experience is seriously affected by instable calls and large time delay existing in the related art is solved. The user can know the link call quality of the current network before calling, thereby enabling the user to select, according to the link call quality, the appropriate call manner and application for the call, greatly improving the user experience.

### Brief Description of the Drawings

Drawings, provided for further understanding of the disclosure and forming a part of the specification, are used to explain the disclosure together with embodiments of the disclosure rather than to limit the disclosure. In the drawings:
Fig. 1 is a flowchart of a call processing method according to the embodiments of the present disclosure;
Fig. 2 is a structural block diagram of a call processing according to the embodiments of the present disclosure;
Fig. 3 is an example structural block diagram of an acquiring component 22 in a call processing according to the embodiments of the present disclosure;
Fig. 4 is an example structural block diagram of an acquiring element 34 in the acquiring component 22 in the call processing according to the embodiments of the present disclosure;
Fig. 5 is example structural block diagram I of a processing component 24 in a call processing according to the embodiments of the present disclosure;
Fig. 6 is example structural block diagram II of a processing component 24 in a call processing according to the embodiments of the present disclosure;
Fig. 7 is an example structural block diagram of a call processing according to the embodiments of the present disclosure;
Fig. 8 is a structural block diagram of a terminal according to the embodiments of the present disclosure;
Fig. 9 is a schematic diagram of call processing of displaying the call quality of different call modes according to an example implementation of the present disclosure; and
Fig. 10 is a schematic diagram of call processing of displaying the call quality of different call applications according to an example implementation of the present disclosure.

### Detailed Description of the Embodiments

The disclosure is described below in detail by reference to the accompanying drawings in conjunction with embodiments. Note that, the embodiments of the present disclosure and the features of the embodiments can be combined with each other if there is no conflict.

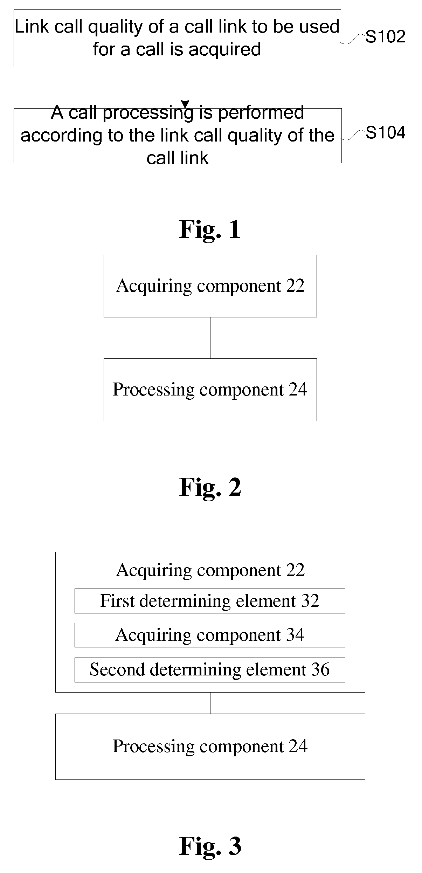

A method for processing a call is provided in this embodiment of the present disclosure. Fig. 1 is a flowchart of a method for processing a call according to the embodiments of the present disclosure. As shown in Fig. 1, the flow includes the following steps:
Step S102, Link call quality of a call link to be used for a call is acquired; and
Step S104, A call processing is performed according to the link call quality.

By means of the above steps, the link call quality of the call link to be used for the call is acquired before calling, with respect to the case of large time delay and even call failure often due to the fact that the link call quality of the call link is not known in advance, and the call quality is unstable in the related art. It not only solves the problem that the user experience is seriously affected, but also allows the user to know the link call quality of the current network before calling, thereby enabling the user to select, according to the link call quality, the appropriate call manner and application for the call, greatly improving the user experience.

Various manner can be used to acquire the link call quality of the call link to be used for the call, for example, in order to acquire the real-time current link call quality of the call link to be used for a call, a call link to be used for detection can be determined in advance, i.e. ensuring that the call link is unclogged firstly, and then the unclogged communication link is detected (or probed) to acquire some parameters representing the call link. For example, the call link to be used for detection can be determined by the Interactive Connectivity Establishment (ICE for short) in the related art; and according to the probe on the call link, the transmission time delay and packet loss rate of the call link are acquired. It should be noted that the above transmission time delay and packet loss rate can be acquired according to the probe on the call link in many ways. For example, it can be performed by the following process: a predetermined number of detection message packets with loads of a fixed size are sent to an opposite end of the transmission link, wherein each of the sent detection message packets carries a sending time stamp; one or more returned detection message packets with loads of the same fixed size returned by the opposite end are received, wherein each of the one or more returned detection message packets carries a corresponding sending time stamp carried in a corresponding sent detection message packet; the transmission time delay of the call link is determined, according to a time point when a returned detection message packet is received and the corresponding sending time stamp carried in the corresponding sent detection message packet; and the packet loss rate of the call link is determined, according to the number of the one or more returned detection message packets received and the predetermined number. The following processing method can be used during particular implementation: firstly the detection is performed by means of a detection end sending a detection message packet, wherein a sending time stamp is carried in the detection message packet, and the opposite end feeds back a response packet with the same size as the detection message packet to the detection end, wherein the response packet carries the above sending time stamp carried in the detection message packet; and the detection end acquires the transmission time delay of the call link according to the fed back time stamp and the time when the returned detection message packets is received, and determines the packet loss rate of the call link, according to the proportion of the number of answer packets in the response packet to the number of the sent detection packets. The link call quality of the call link is determined according to the transmission time delay and the packet loss rate. It should be noted that, the link call quality of the call link can be determined in various manners according to the acquired transmission time delay and the packet loss rate. For example, the link call quality of the call link can be directly determined according to the transmission delay and the packet loss rate; for another example, a network bandwidth can be acquired by the proportion of packet size to the transmission time delay, and the link call quality of the call link can be determined according to the network bandwidth and the packet loss rate determined in the above method.

Different call manners, or different call applications can be used to perform a call, and when the call processing is performed according to the link call quality, a call manner or a call application can be selected at first, for example, a call manner can be selected according to the link call quality corresponding to different call manners; and the call processing is performed by means of the selected call manner. For another example, a call application can be selected according to the link call quality corresponding to different call applications; and the call processing is performed by using the selected call application.

In an example embodiment, after the link call quality of the call link to be used for the call, the link call quality corresponding to different call manners and/or the link call quality corresponding to different applications can also be displayed. There may also be a plurality of display ways, for example, the link call quality can be displayed in numerical representation, such as, representing the standard of the link call quality by using a numerical value of 0 to 5, wherein 0 indicates that the link call quality is extremely bad, and 5 indicates that the link call quality is very good. For another example, the standard of the link call quality can be represented by means of a signal icon, wherein a signal of full bars indicates that the link call quality is extremely good, and a signal of no bar indicates that the link call quality is extremely bad. Of course, other differential identities can also be used for displaying, which will not be given examples here one by one.

A device for processing a call is provided in the embodiment of the present disclosure, which is used to implement the above embodiment and the example embodiments, and those that have been described before will not be described again. As used below, the term "component" is a combination of software and/or hardware capable of implementing predetermined functions. Although the apparatus described in the embodiments below is preferably implemented with software, implementation with hardware, or a combination of software and hardware can also be conceived.

Fig. 2 is a structural block diagram of a device for processing a call according to the embodiment of the present disclosure, and as shown in Fig. 2, the device comprises an acquiring component 22 and a processing component 24. The device for processing the call is described below.

An acquiring component 22 is configured to acquire link call quality of a call link to be used for a call; and a processing component 24, connected to the acquiring component 22, and configured to perform a call processing according to the link call quality of the call link.

Fig. 3 is an example structural block diagram of the acquiring component 22 in the device for processing the call according to the embodiment of the present disclosure; and as shown in Fig. 3, the acquiring component 22 comprises a first determining element 32, an acquiring element 34 and a second determining element 36. The acquiring component 22 is described below.

The first determining element 32 is configured to determine a call link to be used for detection; the acquiring element 34, is connected to the first determining element 32, is configured to acquire a transmission time delay and a packet loss rate of the call link according to a detection for the call link; and the second determining element 36, is connected to the acquiring element 34, and is configured to determine the link call quality of the call link, according to the transmission time delay and the packet loss rate.

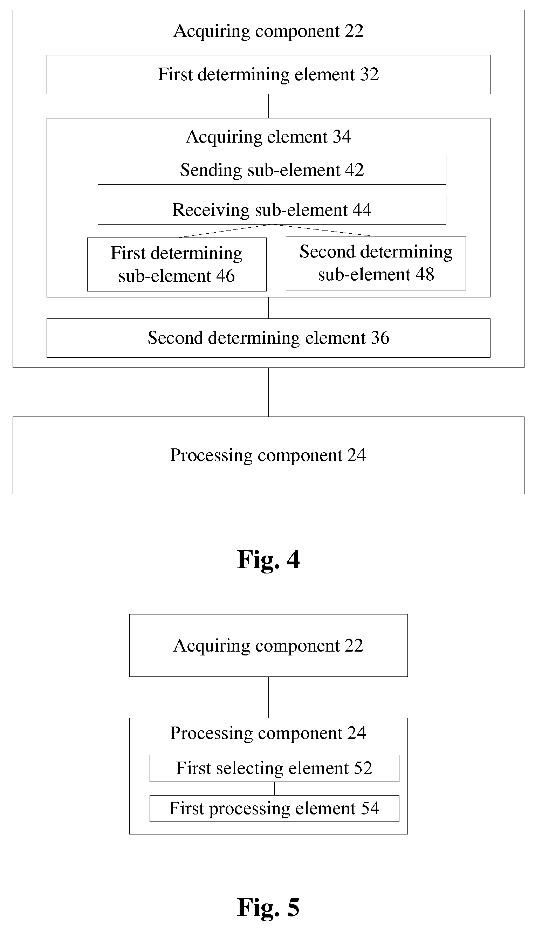

Fig. 4 is an example structural block diagram of the acquiring element 34 in the acquiring component 22 in the device for processing the call according to the embodiment of the present disclosure; and as shown in Fig. 4, the acquiring element 34 comprises: a sending sub-element 42, a receiving sub-element 44, a first determining sub-element 46 and a second determining sub-element 48. The acquiring element 34 is described below.

The sending sub-element 42 is configured to send to an opposite end of a transmission link a predetermined number of detection message packets with loads of a fixed size, wherein each of the sent detection message packets carries a sending time stamp; the receiving sub-element 44 is configured to receive one or more returned detection message packets with loads of the same size returned by the opposite end, wherein each of the one or more returned detection message packets carries a corresponding sending time stamp in a detection message packet; the first determining sub-element 46, which is connected to the receiving sub-element 44, is configured to determine the transmission time delay of the call link, according to a time point when a returned detection message packet is received and the corresponding sending time stamp carried in the corresponding sent detection message packet; and the second determining sub-element 48, which is connected to the receiving sub-element 44, is configured to determine the packet loss rate of the call link, according to the number of the one or more returned detection message packets received and the predetermined number.

Fig. 5 is an example structural block diagram I of a processing component 24 in the device for processing the call according to the embodiment of the present disclosure; and as shown in Fig. 5, the processing component 24 comprises a first selecting element 52 and a first processing element 54. The processing component 24 is described below.

The first selecting element 52 is configured to according to link call quality corresponding to different call manners, select a call manner; and the first processing element 54, which is connected to the first selecting element 52, is configured to perform the call processing according to the call manner selected by the first selecting element 52.

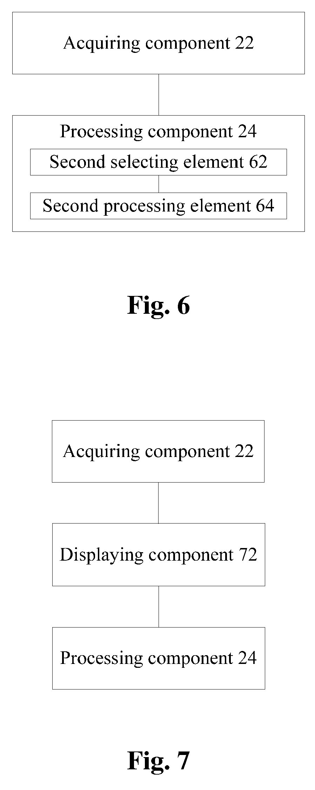

Fig. 6 is an example structural block diagram II of the processing component 24 in the device for processing the call according to the embodiment of the present disclosure; and as shown in Fig. 6, the processing component 24 comprises a second selecting element 62 and a second processing element 64. The processing component 24 is described below.

The second selecting element 62 is configured to according to link call quality corresponding to different call applications, select a calling application; and the second processing element 64, which is connected to the second selecting element 62, is configured to perform the call processing according to the calling application selected by the second selecting element 62.

Fig. 7 is an example structural block diagram of the device for processing the call according to the embodiment of the present disclosure; and as shown in Fig. 7, the device, besides comprising all the components shown in Fig. 2, further comprises a displaying component 72. The displaying component 72 is described below.

The displaying component 72, which is connected to the acquiring component 22 and the processing component 24, is configured to display link call quality corresponding to different call manners and/or the link call quality corresponding to different applications.

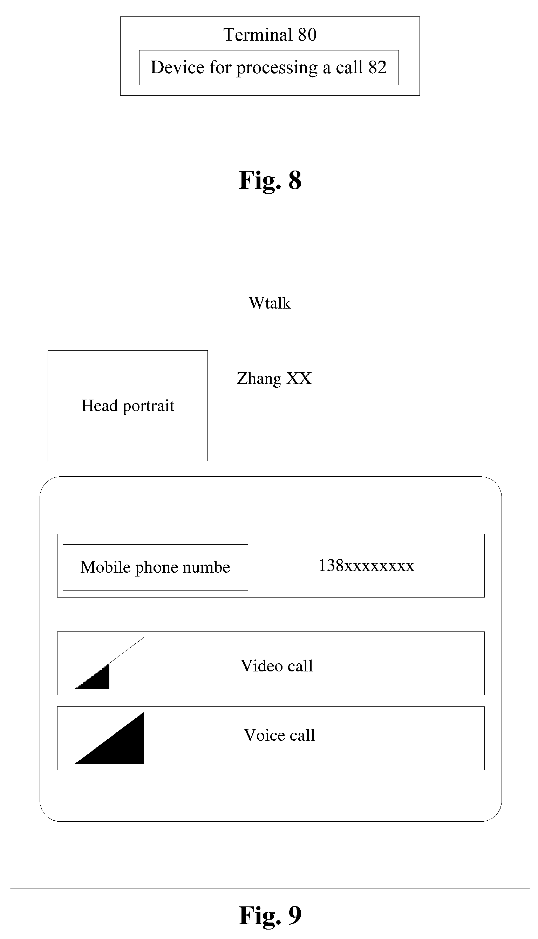

Fig. 8 is a structural block diagram of a terminal according to the embodiment of the present disclosure; and as shown in Fig. 8, the terminal 80 comprises any one of the above devices for processing the call 82.

There is no indicator for indicating call quality in an IP call application interface designed in the related art, a user is not able to judge the call quality. When there are a plurality of applications that can be used for calling, the user would also not be able choose the currently optimal application to make a call; or when the current network is totally not suitable for a data-based voice call, the user must select the traditional CS call. On this basis, in this example embodiment, an interface designing method for guiding the user to judge the quality of a call about to be generated is proposed. By means of this method, the problem that the existing IP call application is incapable of enable the user to know the call quality of the current network before calling is solved, therefore an appropriate call manner is selected.

The implementation method in which the call quality is indicated is provided in this embodiment, comprising: the relevant data of a call link to be generated is obtained before the call link is established, thus the call quality is estimated (i.e. the above link call quality) in advance. The cases affecting the link call quality are generally as follows: the voice quality, and the time delay of the call. The cases (factors) affecting the quality of the voice are as follows: the quality of voice recording, the quality of loudspeaker playing, the effect of an echo suppression algorithm, and a network packet loss rate. The time delay of the call = the processing time of the sending end + an end-to-end transmission time + a receiving time of a receiving end. The network packet loss rate and the end-to-end transmission time are related to the currently called media link, and the other factors are all related to the terminal device and the IP call application. Therefore, the terminal can estimate the link call quality according to the obtained two pieces of data, i.e. the network packet loss rate and the end-to-end transmission time, by combining the properties of the terminal *per se.*

First of all, a media link needs to be determined, and a sip message is sent to an opposite end to initiate an ICE detection before making a call, wherein the Message is of a customized message type, and the Message carries the relevant candidate data required by the ICE detection; and the opposite end, after receiving the Message, carries the Candidate data of the opposite end in the returned 200 Ok message. Then both parties initiate the ICE detection, so as to determine a media sending link. The flow for collecting the Candidate data and the ICE detection can refer to an ICE relevant document.

After the media transmission path is determined, the link needs to be detected. During the detection, a plurality of detection message packets with loads of a fixed size are continuously sent to the opposite end through the above path, wherein the detection message packet carries a sending time stamp; and after receiving the detection message packet, the opposite end replies with a 200 Ok answer packet with loads of the same size, and copies the time stamp in the detection message packet to the 200 Ok answer packet. The detection end records a loop time of each detection message packet, and then makes calculation according to formulas: the network bandwidth = the packet size/ the transmission time, and the packet loss rate = the number of answer packets/the number of detection packets. After the two pieces of data, the network bandwidth and the packet loss rate are obtained, the detection terminal compares the requirements for the network bandwidth and packet loss rate on the call, and obtains the corresponding call quality evaluated value.

In a certain specific IP call application, there are a plurality of call manners, such as a simple voice call, a video call, etc. After the evaluated value is obtained, before initiating the call, the evaluated call quality value is displayed on a corresponding keypad icon. For example, a red keypad icon indicates the bad quality, and a green keypad icon indicates the good quality; and the user can select a call manner which can satisfy the requirement thereof very conveniently.

On the level of operating system, currently, the main-stream operating system all support that a plurality of applications can be selected for one operation. For example, a system self-taking short message component or a third-party application can be used to send a short message. It is the same case for a call. When a user wants to make a call to a contact person, when clicking a call button, there are a plurality of calling manners and calling applications for the user to select; at this time, the call quality indication icons corresponding to different manners are displayed for the user to make judgement.

The optional implementations of the disclosure will be described below in conjunction with the accompanying drawings.

Fig. 9 is a schematic diagram of call processing of displaying the link call quality corresponding to different call manners according to an example implementation of the present disclosure. As shown in Fig. 9, the call quality is displayed in some Wtalk with an IP call function, and in the contact detail interface inside the Wtalk, there are two options, i.e. video call and voice call. For example, Zhang XX is selected inside Wtalk, the Wtalk obtains the evaluated call quality values of the two manners respectively; and the evaluated call quality values can be represented in many manners. For example, an icon representing the signal intensity can be used to identify each call quality, wherein a full bar indicates good quality, and as shown in the figure, the illustration shows that the call quality of the video link is poor, and the call quality of the voice link is good at present. For another example, numerical values can also be used for representation, assuming the numerical values are 0-5, wherein 0 indicates non-available and 5 indicates very good; and then the call quality corresponding to each call manner is identified, and the user selects the appropriate call manner on this basis.

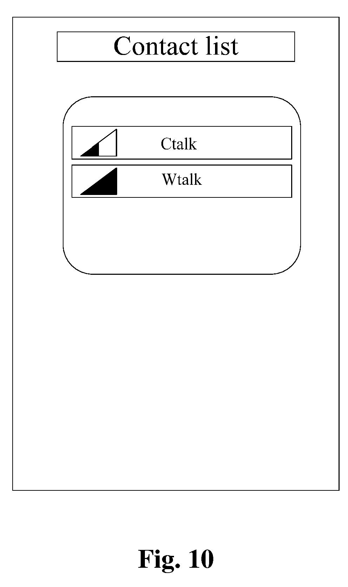

Fig. 10 is a schematic diagram of call processing of displaying the call quality of different call applications according to an example implementation of the present disclosure. As shown in Fig. 10, before an IP call is initiated in the contact list, the system obtains an application set that can satisfies the call manner, and obtains, from a corresponding application, an evaluated value of the link call quality; and the system provides different identifiers depending on the evaluated value, and displays same in a popup menu. For example, when an IP call to Li X is initiated in a contact list, the system prompts that there are two applications can initiate the IP call, i.e. Ctalk and Wtalk; and an icon representing the signal intensity is used to identify the call quality of each call manner, and it is easy to judge that the call quality of Wtalk is better via the illustration.

Obviously, those skilled in the art should know that each of the mentioned components or steps of the disclosure can be realized by universal computing devices; the components or steps can be focused on single computing device, or distributed on the network formed by multiple computing devices; selectively, they can be realized by the program codes which can be executed by the computing device; thereby, the components or steps can be stored in the storage device and executed by the computing device; and under some circumstances, the shown or described steps can be executed in different orders, or can be independently manufactured as each integrated circuit component, or multiple components or steps thereof can be manufactured to be single integrated circuit component, thus to be realized. In this way, the present disclosure is not restricted to any particular hardware and software combination.

The above description is only example embodiments of the disclosure and is not intended to limit the disclosure, and the disclosure can have a variety of changes and modifications for ordinary person skilled in the field. Any amendments, equivalent substitutions, improvements, etc. within the principle of the disclosure are all included in the scope of the protection of the disclosure.

As stated above, a method and device for processing a call, and a terminal are provided in the embodiments of the present disclosure, which brings the following beneficial effects: the problem that the user experience is seriously affected by instable calls and large time delay existing in the related art is solved. Allows the user to know the link call quality of the current network before calling, thereby enabling the user to select, according to the link call quality, the appropriate call manner and application for the call, greatly improving the user experience.

## Claims

1. A method for processing a call, **characterized by** comprising:
acquiring link call quality of a call link to be used for a call; and
performing a call processing according to the link call quality of the call link.

2. The method according to claim 1, **characterized in that** acquiring the link call quality of the call link to be used for the call comprises:
determining a call link to be used for detection;
acquiring a transmission time delay and a packet loss rate of the call link according to a detection for the call link; and
determining the link call quality of the call link according to the transmission time delay and the packet loss rate.

3. The method according to claim 2, **characterized in that** acquiring the transmission time delay and the packet loss rate of the call link according to the detection for the call link comprises:
sending to an opposite end of a transmission link a predetermined number of detection message packets with loads of a fixed size, wherein each of the sent detection message packets carries a sending time stamp;
receiving one or more returned detection message packets with loads of the same fixed size returned by the opposite end, wherein each of the one or more returned detection message packets carries a corresponding sending time stamp carried in a corresponding sent detection message packet;
determining the transmission time delay of the call link according to a time point when a returned detection message packet is received and the corresponding sending time stamp carried in the corresponding sent detection message packet; and
determining the packet loss rate of the call link according to the number of the one or more returned detection message packets received and the predetermined number.

4. The method according to claim 1, **characterized in that** performing the call processing according to the link call quality of the call link comprises:
selecting a calling manner according to link call quality corresponding to different calling manners; and
performing the call processing according to the selected calling manner.

5. The method according to claim 1, **characterized in that** performing the call processing according to the link call quality of the call link comprises:
selecting a calling application according to link call quality corresponding to different calling applications; and
performing the call processing according to the selected calling application.

6. The method according to any one of claims 1 to 5, **characterized in that**, after acquiring the call quality of the call link to be used for the call, the method further comprises:
displaying link call quality corresponding to different calling manners and/or link call quality corresponding to different calling applications.

7. A device for processing a call, **characterized by** comprising:
an acquiring component, configured to acquire link call quality of a call link to be used for a call; and
a processing component, configured to perform a call processing according to the link call quality of the call link.

8. The device according to claim 7, **characterized in that** the acquiring component comprises:
a first determining element, configured to determine a call link to be used for detection;
an acquiring element, configured to acquire a transmission time delay and a packet loss rate of the call link according to a detection for the call link,; and
a second determining element, configured to determine the link call quality of the call link, according to the transmission time delay and the packet loss rate.

9. The device according to claim 8, **characterized in that** the acquiring element comprises:
a sending sub-element, configured to send to an opposite end of a transmission link a predetermined number of detection message packets with loads of a fixed size, wherein each of the sent detection message packets carries a sending time stamp;
a receiving sub-element, configured to receive one or more returned detection message packets with loads of the same size returned by the opposite end, wherein each of the one or more returned detection message packets carries a corresponding sending time stamp in a corresponding sent detection message packet;
a first determining sub-element, configured to determine the transmission time delay of the call link according to a time point when a returned detection message packet is received and the corresponding sending time stamp carried in the corresponding sent detection message packet; and
a second determining sub-element, configured to determine the packet loss rate of the call link according to the number of the one or more returned detection message packets received and the predetermined number.

10. The device according to claim 7, **characterized in that** the processing component comprises:
a first selecting element, configured to select a calling manner according to link call quality corresponding to different calling manners; and
a first processing element, configured to perform the call processing according to the calling manner by the first selecting element.

11. The device according to claim 7, **characterized in that** the processing component comprises:
a second selecting element, configured to select a calling application, according to link call quality corresponding to different calling applications; and
a second processing element, configured to perform the call processing according to the calling application selected by the second selecting element.

12. The device according to any one of claims 7 to 11, **characterized in that** the device further comprises:
a displaying component, configured to display link call quality corresponding to different calling manners and/or link call quality corresponding to different calling applications.

13. A terminal, **characterized by** comprising a device as claimed in any one of claims 7 to 12.
